# EUROPEAN PATENT SPECIFICATION

(11) **EP 1 794 018 B1**
(45) Date of publication and mention of the grant of the patent: **08.06.2011**
(21) Application number: 05777247.7
(22) Date of filing: 02.09.2005
(51) Int. Cl.: B60K 13/00, B60K 13/04

(54) **MUFFLER DEVICE**
DÄMPFERVORRICHTUNG
DISPOSITIF D'UN SILENCIEUX

(30) Priority: 20.09.2004 SE 0402281
(43) Date of publication of application: 13.06.2007
(73) Proprietor: VOLVO LASTVAGNAR AB, 405 08 Göteborg (SE)
(72) Inventor: IVARSSON, Anders, S-423 40 Torslanda (SE); PÜTTER, Thomas, S-434 02 Vallda (SE)
(74) Representative: Fröhling, Werner Otto
(86) International application number: PCT/SE2005/001278
(87) International publication number: WO 2006/033608

(56) References cited:
- EP-A1- 0 719 914
- EP-A2- 1 106 414
- WO-A-98/34808
- WO-A1-2004/056601
- DE-A1- 1 555 606
- DE-A1- 19 605 702
- KR-A- 20030 075 932
- US-A- 4 465 252
- US-A- 5 054 799
- US-B1- 6 378 823

## Description

### TECHNICAL FIELD:

The present invention relates to a muffler device for a vehicle, in particular a device for supporting and attaching the muffler to the vehicle in the form of at least one bracket permanently attached to the vehicle, provided with means for attaching the muffler to the bracket. The invention also comprises a method for mounting the said muffler on a vehicle.

### BACKGROUND ART:

An example of an arrangement for supporting a muffler is known from DE 1555606. In this type of arrangement, the muffler is indirectly supported by supporting a tail pipe. This type of mounting is inadequate for mounting arrangements of larger mufflers, such as mufflers used for heavy goods vehicles.

The most common solution for mounting a muffler, in particular on heavy goods vehicles, is to use a bracket that projects over or under the muffler. The bracket interacts with straps that are attached to the outer ends of the bracket and that, together with the bracket, surround the muffler to attach it to the bracket. For this purpose, the muffler is usually round. With this type of bracket, the bracket requires a lot of space in a vertical direction, which means that the total space for the muffler and bracket can not be utilized effectively. In addition, the requirement for ground clearance limits the space in a downward direction. In addition, circular mufflers have the disadvantage that there is a danger that they will rotate in their fixing, which results in stresses on items attached to the mufflers, for example connecting cables.

In addition, from a purely technical point of view, obtaining sufficient space for mounting, during production, a muffler on a bracket that is to be placed above or below the muffler is complicated. This also means that the working position for the fitter is not ergonomic. In addition, the actual bracket of the said type takes up a relatively large amount of space.

The desire to fulfil legislation relating to emissions for environmental considerations, means that the introduction of catalytic exhaust filtration is increasing within the vehicle industry. This has the result that the components comprised in vehicles must be adapted to meet these new guidelines. In order to obtain exhaust gases with a relatively small amount of chemicals that are harmful to the environment, catalytic exhaust filtration is thus being introduced on increasing numbers of vehicle models. The muffler is therefore equipped with a catalyser and means for after-treatment of exhaust gases, which means that the container requires increased space for housing both muffling and catalytic exhaust filtration. In order to make room for a larger muffler, it is advantageous to utilize the available space more effectively. One way of doing this is to replace the known, bulky brackets with a space-saving bracket. Another way is to give the container a shape that utilizes the available space more effectively.

As a muffler with catalytic exhaust filtration is, in addition, considerably heavier than a conventional muffler, it is also necessary for the bracket to be adapted for this greater weight and for the muffler to be attached to the bracket in an improved way. In addition, an improved method is required for mounting the muffler to the bracket.

### DISCLOSURE OF INVENTION:

The object of the invention is to obtain a device that makes it possible to mount a container in a space-saving and simple way, so that the available mounting space is utilized in a maximal way and so that, at the same time, the container is held securely in a selected position.

The object of the invention is also to obtain a method for mounting a container on a vehicle in a simple and ergonomic way, so that the available mounting space is utilized in a maximal way.

The said objects are achieved by means of a device according to the present invention, by the comprised bracket being made single-sided, that is being placed along one long side of the container with, in the mounting position, a principally vertical extent and by the bracket having a limited size in relation to the container that the bracket is intended to support. The bracket is thus positioned asymmetrically in relation to the container.

The said objects are achieved more specifically by obtaining a device for mounting an oval container on a motor vehicle, comprising a bracket designed to be mounted vertically on the frame of a vehicle, where the bracket comprises an upper arm and a lower arm, with the device also comprising a mounting unit consisting of a reinforcing beam designed to be mounted on the upper arm, a beam designed to be mounted on the lower arm and at least one strap holder designed to interact with a strap to attach the said oval container, with the reinforcing beam and the beam being permanently attached to the said strap holder.

The bracket as a whole is thus intended to be positioned along one long side of an oval cylindrical container and the container is attached to the bracket at the places where the container is rounded. As the bracket essentially does not project beyond the extent of the container in a vertical direction, that is above or below the container, the container can be dimensioned so that it is a maximum size while retaining a reliable fixing function.

As the container is only attached to the bracket at one long side; the container is simple to mount in the required position and, as a result of the bracket being single-sided, that is as a result of the bracket being positioned asymmetrically in relation to the container, the bracket is also cost-effective as only one bracket is required to support a container. An alternative is to arrange a bracket on both sides of the container for reasons associated with stresses, which would involve higher costs as more brackets would have to be produced and, in addition, more space would be taken up on the goods vehicle.

The bracket is dimensioned in such a way that it does not significantly extend above a plane which coincides with the upper horizontal extent of the container. This is achieved by the upper arm of the bracket being essentially attached to the upper, rounded part of the container.

In addition, the bracket is dimensioned in such a way that it does not significantly extend below a plane which coincides with the lower horizontal extent of the container. This is achieved by the lower arm of the bracket being attached to the lower rounded part of the container.

In order to take up as little space as possible, the bracket is thus only attached to one side of the oval container. The bracket is thus positioned asymmetrically in relation to the container and essentially vertically.

The solution according to the invention is described in the characterizing part of claim 1 concerning the bracket and in the characteristics in claim 5 concerning the method for mounting the bracket and the container on the vehicle. The other claims contain advantageous embodiments and further developments of the device and the method according to the invention.

### BRIEF DESCRIPTION OF DRAWINGS:

The invention will be described in greater detail in the following, in which:
- Figure 1: shows the current technology,
- Figure 2: shows a bracket according to the invention with container mounted on a vehicle,
- Figure 3: shows a view of a bracket according to the invention with associated container,
- Figure 4: shows a bracket according to the invention without container.

### DESCRIPTION OF EMBODIMENTS:

The embodiments of the invention with further developments described in the following are only to be regarded as examples and are in no way to limit the protection provided by the patent claims. In the embodiments described here, the same reference numerals in the different figures refer to the same type of component.

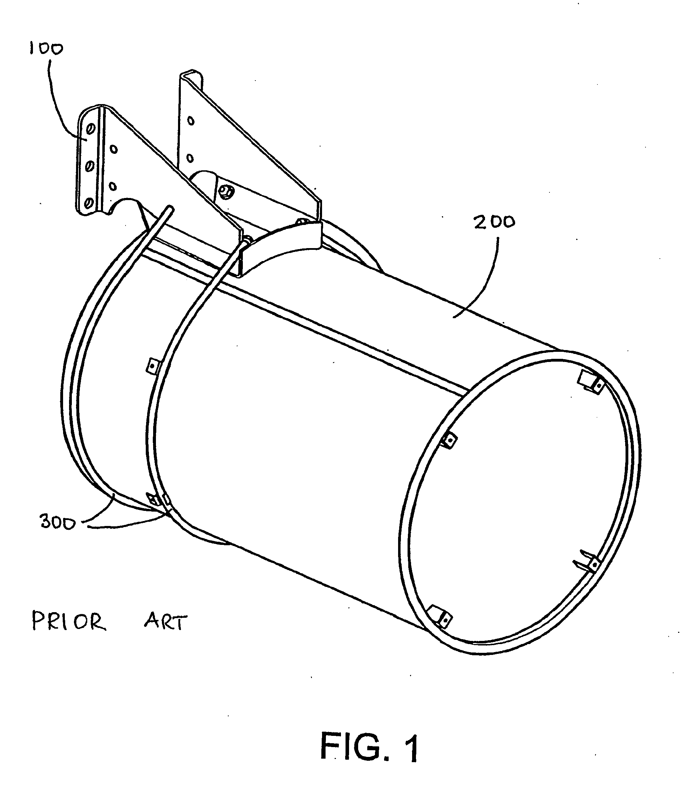

Figure 1 shows a bracket 100 for attaching to a round muffler of the type that is currently in use. The muffler 200 is supported by a bracket 100 that projects above the muffler 200 and interacts with straps 300 that are attached to the outer ends of the bracket and, together with the bracket 100, surround the muffler 200 to attach this to the bracket 100.

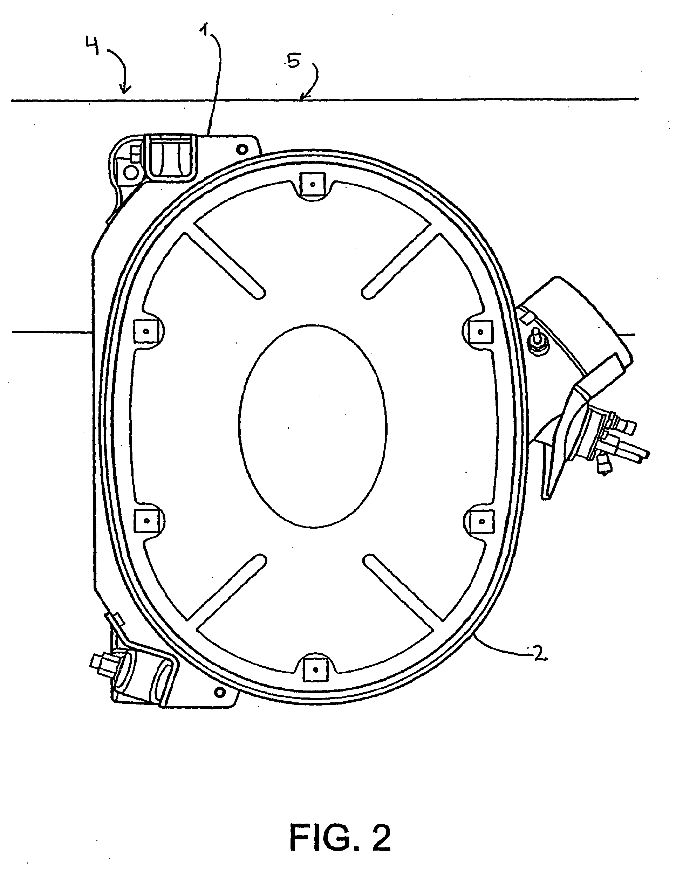

Figure 2 shows a part of the side 4 of a heavy goods vehicle with a bracket 1 and an oval, cylindrical container 2 mounted in the bracket 1, which container contains muffler and catalyser and means for after-treatment (not shown). The bracket 1 is essentially mounted vertically with an upper arm and a lower arm, in which arms the container 2 is attached.

The bracket 1 is attached at its upper part to the frame 5 of the vehicle, preferably by means of bolts. The lower part of the bracket 1 hangs freely in relation to the vehicle. According to this figure, the side 4 of the goods vehicle constitutes a part of the right side of the goods vehicle, viewed in the vehicle's direction of travel. The bracket 1 is single-sided, that is it is arranged along one long side of the container, and is mounted behind the container 2 viewed in the direction of travel. In the part of the frame 5 on which the bracket 1 is mounted, it is assumed that there is also room for bolts at the back of the frame 5. According to Figure 2, due to a lack of space, the bracket 1 is mounted behind the container 2. In a different application, it could be possible to position the bracket 1 on the opposite side of the container 2, that is in front of the container, viewed in the direction of travel, according to Figure 2.

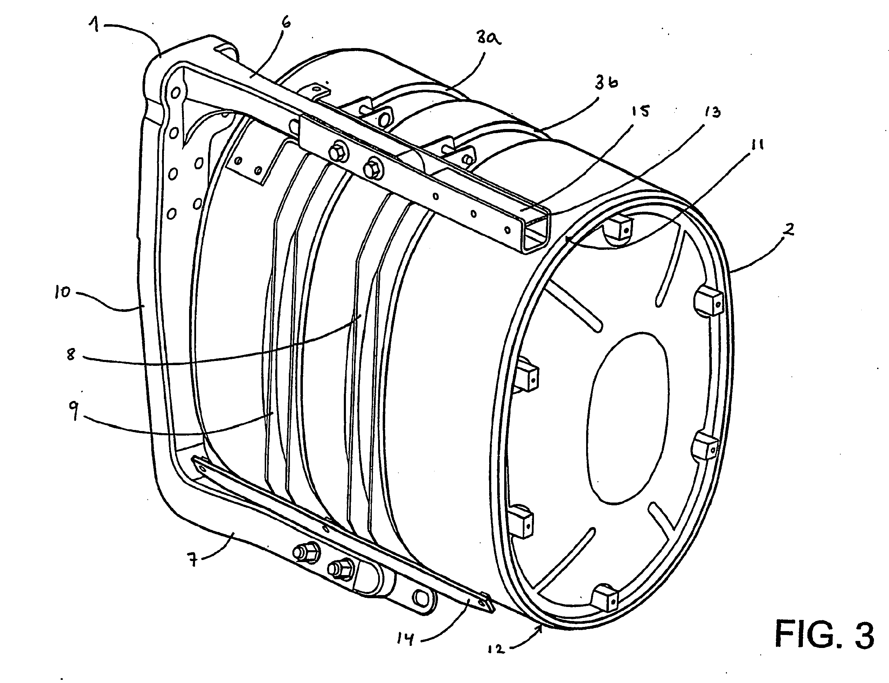

The container 2 consists of a cylinder with an oval casing with an opening in each essentially flat end of the casing. The oval shape means that the container 2 has rounded parts, see for example 11 and 12 in Figure 3. The container 2 is mounted on the bracket 1 at one long side of the container 2.

The container 2 is mounted on the bracket 1 at one upper rounded part of the container 2, which is advantageous as far as space is concerned and also provides ergonomic advantages when mounting the container 2 in the bracket 1. As shown by the figure, the bracket 1 and container 2 form a compact unit that is small in volume, in order to make it possible to mount other parts comprised in the goods vehicle.

Figure 3 shows a bracket 1 in which the container 2 is mounted. The container 2 is attached to the bracket 1 at the upper rounded part 11 of the container and at the lower rounded part 12 of the container in such a way that the bracket does not project significantly beyond the extent of the container 2 in a vertical direction. For example, it is proposed that the bracket 1 should not project more than 15 mm above and 5 mm below the container 2. In a lateral direction, it is proposed that the bracket should not project more than 5 mm beyond the container.

In the vertical mounting position, the bracket 1 consists of an upper arm 6 and a lower arm 7 with a linking part 10 between these two arms 6, 7. The linking part 10 has bolt holes in its upper part with room for bolts for mounting in the frame 5, see Figure 2. In order to make it stronger, the linking part 10 of the bracket 1 is, in addition, designed with a slightly wider upper part and a narrower lower part. Two strap holders 8, 9 are mounted between the projecting arms 6, 7 of the bracket in order to ensure that the construction is sufficiently robust. These strap holders 8, 9 follow the outside of the container 2 and are attached to the upper arm 6 and lower arm 7 of the bracket 1 in such a way that the strap holders 8, 9 run essentially parallel to the linking part 10 of the bracket 1. The strap holders 8, 9 also help to clamp the container 2 to the bracket 1. As the strap holders 8, 9 run along the container 2, they also prevent the container 2 from being able to rotate in its fixing and the strap holders 8, 9 have thereby also a stabilizing effect. In the solution according to the invention, the requirement for strength is greater than in the current solutions as the container 2 is arranged asymmetrically on the bracket 1. The container 2 is fixed to the bracket 1 by means of the strap holders 8, 9 and the straps 3a, 3b.

A reinforcing beam 13 is mounted on the upper arm 6 of the bracket 1. The strap holders 8, 9 are mounted on this reinforcing beam 13, for example by welding. A beam 14 is similarly mounted on the lower arm 7 of the bracket 1, to which beam the strap holders 8, 9 are mounted, for example by welding. The reinforcing beam 13 is intended to be used to attach the container 2 to the bracket. It can also be used as a holder for, for example, radiating elements and/or damping elements that are attached to the reinforcing beam 13. In the embodiment shown, the reinforcing beam 13 is a U-shaped beam and in order to prevent the flanges in the U-shaped beam being pressed together by the stresses, the reinforcing beam 13 has been stabilized with a plate 15 that has been welded to the flanges, see Figure 3. The lower beam 14 is also intended to be used to attach the container to the bracket. In the embodiment shown, the beam 14 is slightly angled, among other things in order to make mounting the container easier.

The strap holders 8, 9, the reinforcing beam 13 and the beam 14 together constitute a unit defined as a mounting unit 16.

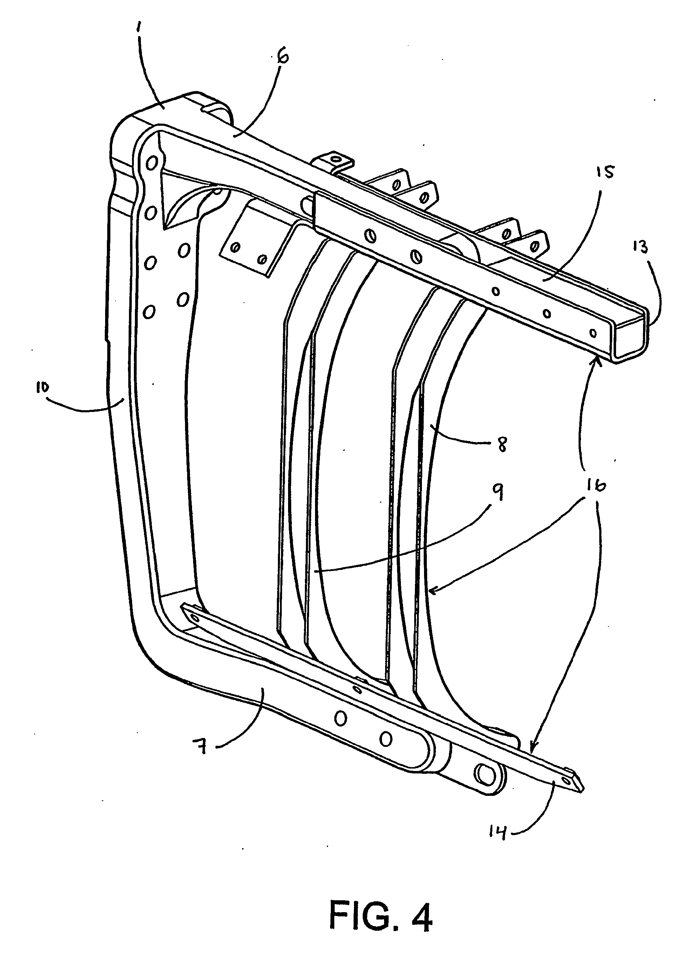

Figure 4 shows a bracket 1 according to the invention without a mounted container 2. In the vertical mounting position, the bracket 1 consists of an upper arm 6 and a lower arm 7 with a linking part 10 between these two arms 6, 7. The upper part of the linking part 10 is mounted on the frame 5 of the vehicle, see Figure 2. The fixing area of the bracket 1 is thus positioned in the vicinity of the upper arm 6. The upper part of the linking part 10 is constructed somewhat more robustly than its lower part in order to cope with the stresses in the mounted upper part. The reinforcing beam 13 is joined to the strap holders 8, 9, for example by welding. Similarly, the beam 14 is joined to the strap holders 8, 9, for example by welding. The reinforcing beam 13, the strap holders 8, 9 and the beam 14 constitute a unit defined as a mounting unit 16. The straps 3a, 3b are attached to the strap holders 8, 9 and are tightened so that the container 2 is clamped against the strap holders 8, 9 in a predefined way. The mounting unit 16 comprises positioning means designed to position the mounting unit 16 in relation to the bracket 1 in a predefined way prior to the mounting unit being attached with fixing elements, for example bolts. In addition, the mounting unit 16 is designed to be mounted on the bracket 1 in a plane at right angles to the mounting plane of the bracket.

The method according to the invention for mounting the muffler on the goods vehicle comprises the following four main steps:
1. The bracket 1 is mounted vertically on the frame 5 of the goods vehicle by means of bolts. These advantageously pass through a matching pattern of holes in the frame.
2. Irrespective of when this first step is carried out, the upper parts of the strap holders 8, 9 are welded onto the reinforcing beam 13 in such a way that the parts form an angle of approximately 90 degrees in relation to each other. The lower parts of the strap holders 8, 9 are welded to the beam 14, which is slightly angled. These parts are also welded in such a way that they form an angle of approximately 90 degrees in relation to each other. The strap holders 8, 9 together with the reinforcing beam 13 and the beam 14 together define a unit called a mounting unit 16.
3. The container 2 is offered up to the mounting unit 16 comprising strap holders 8, 9, reinforcing beam 13 and beam 14. The container 2, that has an oval cylindrical shape, is placed in such a way that its one long side is in contact with both the strap holders 8, 9. Straps 3a, 3b are attached to the strap holders 8, 9 and are tightened in such a way that the container 2 is clamped against the strap holders 8, 9 in a predefined way.
4. The mounted unit comprising strap holders 8, 9, with straps 3a, 3b, reinforcing beam 13, beam 14 and container 2, is thereafter offered up to the bracket 1 and pushed onto the bracket in a direction that is at right angles to the mounting plane of the bracket. The mounted unit, that is the mounting unit 16 with container 2 mounted by the straps, is thereafter attached to the upper arm 6 and lower arm 7 of the bracket by means of suitable fixing elements, for example bolts.

In an embodiment of the invention, the mounting unit 16 is self-fixing in relation to the container 2. By this is meant that after it has been placed in a predefined position, the container maintains its position without external forces being applied to the container 2, so that the container 2 maintains its position before it is attached using the fixing elements. The self-fixing is achieved by the inclining of the beam 14 and the design of the beam 13 and by positioning means arranged on the mounting unit 16. In this embodiment, the container 2 is thus positioned on the bracket 1 by the positioning means in a predefined way prior to the mounting unit 16 being attached by the fixing elements.

By means of the arrangement described above, an effective and reliable fixing of a container 2 is made possible, which in combination with the fixing function is optimized as far as volume is concerned as a result of the vertically-mounted bracket 1 only being mounted along one long side of the container 2 and, in addition, not projecting significantly beyond the container 2, whereby the container can be dimensioned to utilize the available space in the vehicle in a maximal way.

In addition, a method is obtained for mounting a container 2 on a vehicle in a simple and reliable way by first mounting the container 2 in a mounting unit 16 and clamping the container with straps and thereafter inserting this unit, containing the mounting unit 16 and container with straps, in a bracket 1 mounted on the frame 5 of the vehicle.

The invention is not to be restricted to the bracket being single-sided, that is with the container being mounted in a bracket at only its one long side. A double-sided bracket, that is with the container being mounted in a bracket along each of its two long sides, is another mounting option. In addition, the container can be designed for other purposes than for muffling and catalytic exhaust filtration. For example, the bracket can be used for mounting an air tank, fuel tank and urea tank or any other type of tank.

## Claims

1. A vehicle including a muffler and a device for mounting the muffler on the motor vehicle, comprising a bracket (1) mounted vertically on the frame (5) of the vehicle, where the bracket comprises an upper arm (6) and a lower arm (7), **characterized in that** the device also comprises a mounting unit (16) consisting of a reinforcing beam (13) designed to be mounted on the upper arm (6), a beam (14) designed to be mounted on the lower arm (7) and at least one strap holder (8, 9) designed to interact with a strap (3a, 3b) for attaching the muffler (2), where the reinforcing beam (13) and the beam (14) are permanently attached to the said strap holder (8, 9).

2. The vehicle as claimed in claim 1, **characterized in that** the fixing area of the bracket (1) is positioned in the vicinity of the upper arm (6).

3. The vehicle as claimed in claim 1 or 2, **characterized in that** the mounting unit (16) comprises positioning means designed to position the mounting unit (16) in relation to the bracket (1) in a predefined way prior to the mounting unit (16) being attached with fixing elements.

4. The vehicle as claimed in any one of claims 1 to 3, **characterized in that** the mounting unit (16) is designed to be mounted on the bracket (1) in a plane at right angles to the mounting plane of the bracket.

5. A method for mounting a muffler on a motor vehicle, comprising the steps:
- of mounting a bracket (1) comprising an upper arm (6) and a lower arm (7) vertically on the frame (5) of a vehicle,
- of mounting a muffler (2) on a mounting unit (16) consisting of a reinforcing beam (13), a beam (14) and at least one strap holder (8, 9) with at least one strap (3a, 3b), where the reinforcing beam (13) and the beam (14) are permanently attached to the said strap holder (8, 9),
- of pushing the mounting unit (16) with mounted container (2) onto the bracket (1) in a direction that is at right angles to the mounting plane of the bracket, and
- of fixing the mounting unit (16) to the bracket with fixing elements.

6. The method as claimed in claim 5, comprising the step of the muffler (2) being positioned on the bracket (1) by positioning means in a predefined way prior to the mounting unit (16) being attached with fixing elements.

## Patentansprüche

1. Fahrzeug, das einen Schalldämpfer und eine Vorrichtung zur Anbringung des Schalldämpfers an dem Kraftfahrzeug aufweist, mit einer Halterung (1), die vertikal an dem Rahmen (5) des Fahrzeugs angebracht ist, wobei die Halterung einen oberen Arm (6) und einen unteren Arm (7) umfasst, **dadurch gekennzeichnet, dass** die Vorrichtung außerdem eine Montageeinheit (16) umfasst, die aus einem Verstärkungsträger (13), der so ausgelegt ist, dass er an dem oberen Arm (6) angebracht werden kann, einem Träger (14), der so ausgelegt ist, dass er an dem unteren Arm (7) angebracht werden kann, und wenigstens einem Bandhalter (8, 9) besteht, der so ausgelegt ist, dass er mit einem Band (3a, 3b) zum Anbringen des Schalldämpfers (2) zusammenwirkt, wobei der Verstärkungsträger (13) und der Träger (14) permanent an dem Bandhalter (8, 9) angebracht sind.

2. Fahrzeug nach Anspruch 1, **dadurch gekennzeichnet, dass** der Befestigungsbereich der Halterung (1) in der Nähe des oberen Arms (6) angeordnet ist.

3. Fahrzeug nach Anspruch 1 oder 2, **dadurch gekennzeichnet, dass** die Montageeinheit (16) Positioniereinrichtungen umfasst, die so ausgelegt sind, dass sie die Montageeinheit (16) bezüglich der Halterung (1) auf vorherbestimmte Weise positionieren, bevor die Montageeinheit (16) mit Befestigungselementen angebracht wird.

4. Fahrzeug nach einem der Ansprüche 1 bis 3, **dadurch gekennzeichnet, dass** die Montageeinheit (16) so ausgelegt ist, dass sie an der Halterung (1) in einer Ebene im rechten Winkel zu der Montageebene der Halterung angebracht wird.

5. Verfahren zur Montage eines Schalldämpfers an einem Kraftfahrzeug mit den Schritten:
- Anbringung einer Halterung (1) mit einem oberen Arm (6) und einem unteren Arm (7) vertikal an dem Rahmen eines Fahrzeugs,
- Anbringung eines Schalldämpfers (2) an einer Montageeinheit (16), die aus einem Verstärkungsträger (13), einem Träger (14) und wenigstens einem Bandhalter (8, 9) mit wenigstens einem Band (3a, 3b) besteht, wobei der Verstärkungsträger (13) und der Träger (14) permanent an dem Bandhalter (8, 9) angebracht sind,
- Schieben der Montageeinheit (16) mit einem angebrachten Behälter (2) auf die Halterung (1) in eine Richtung, die im rechten Winkel zu der Montageebene der Halterung (1) verläuft, und
- Befestigung der Montageeinheit (16) an der Halterung mit Befestigungselementen.

6. Verfahren nach Anspruch 5 mit dem Schritt der Positionierung des Schalldämpfers (2) an der Halterung (1) durch Positioniereinrichtungen auf vorherbestimmte Weise, bevor die Montageeinheit (16) mit Befestigungselementen angebracht wird.

## Revendications

1. Véhicule comprenant un pot d'échappement et un dispositif pour le montage du pot d'échappement sur le véhicule à moteur, comprenant un support (1) monté verticalement sur le châssis (5) du véhicule, ledit support comprenant un bras supérieur (6) et un bras inférieur (7), **caractérisé en ce que** le dispositif comprend également une unité de montage (16) constituée d'un longeron de renforcement (13) conçu pour être monté sur le bras supérieur (6), un longeron (14) conçu pour être monté sur le bras inférieur (7) et au moins un dispositif de maintien de sangle (8, 9) conçu pour interagir avec une sangle (3a, 3b) destinée à attacher le pot d'échappement (2), ledit longeron de renforcement (13) et ledit longeron (14) étant attachés de manière permanente audit dispositif de maintien de sangle (8, 9).

2. Véhicule selon la revendication 1, **caractérisé en ce que** la zone de fixation du support (1) est positionnée à proximité du bras supérieur (6).

3. Véhicule selon la revendication 1 ou 2, **caractérisé en ce que** l'unité de montage (16) comprend un moyen de positionnement conçu pour positionner l'unité de montage (16) par rapport au support (1) d'une manière prédéfinie avant d'attacher l'unité de montage (16) avec des éléments de fixation.

4. Véhicule selon l'une quelconque des revendications 1 à 3, **caractérisé en ce que** l'unité de montage (16) est conçue pour être montée sur le support (1) dans un plan à angle droit par rapport au plan de montage du support.

5. Procédé de montage d'un pot d'échappement sur un véhicule à moteur, comprenant les étapes suivantes consistant à :
- monter un support (1) comprenant un bras supérieur (6) et un bras inférieur (7) verticalement sur le châssis (5) d'un véhicule,
- monter un pot d'échappement (2) sur une unité de montage (16) constituée d'un longeron de renforcement (13), d'un longeron (14) et d'au moins un dispositif de maintien de sangle (8, 9) avec au moins une sangle (3a, 3b), ledit longeron de renforcement (13) et ledit longeron (14) étant attachés de manière permanente audit dispositif de maintien de sangle (8, 9),
- pousser l'unité de montage (16) avec un conteneur monté (2) sur le support (1) dans une direction qui est à angle droit par rapport au plan de montage du support, et
- fixer l'unité de montage (16) au support avec des éléments de fixation.

6. Procédé selon la revendication 5, comprenant l'étape consistant à positionner le pot d'échappement (2) sur le support (1) par l'intermédiaire d'un moyen de positionnement d'une manière prédéfinie avant d'attacher l'unité de montage (16) avec des éléments de fixation.
